# EUROPEAN PATENT APPLICATION

(11) **EP 4 826 973 A1**
(43) Date of publication of application: **21.10.2026**
(21) Application number: 24904275.5
(22) Date of filing: 13.12.2024
(51) Int. Cl.: H02M 1/00, H02M 3/28, H02M 3/335

(54) **POWER CONVERSION DEVICE**

(30) Priority: 13.12.2023 KR 20230181040
(71) Applicant: LG Innotek Co., Ltd., Seoul 07796 (KR)
(72) Inventor: JUNG, Kwang Soon, Seoul 07796 (KR)
(74) Representative: Plasseraud IP
(86) International application number: PCT/KR2024/020303
(87) International publication number: WO 2025/127710

(57) **Abstract**

A power conversion device according to an embodiment of the present invention includes: a first power conversion unit and a second power conversion unit that convert input power and output converted input power; a first passive element connected in series to the output end of the first power conversion unit; a second passive element connected in series to the output end of the first power conversion unit; and a switching unit connected to the output end of the first power conversion unit and the output end of the second power conversion unit to set the connection states of the output end of the first power conversion unit and the output end of the second power conversion unit.

## Description

### [Technical Field]

The present invention relates to a power conversion device, and more particularly, to a power conversion device capable of capacity expansion.

### [Background Art]

Recently, interest in rapid electric vehicle (EV) chargers, Energy Storage Systems (ESS), and photovoltaic power generation has been increasing. As the power capacity used in applications continues to grow, there is a steady rise in demand for power devices that simultaneously require high voltage output and high current output.

It is necessary to develop a power conversion device that can satisfy such demand.

### [Detailed Description of the Invention]

### [Technical Subject]

A technical subject to be solved by the present invention is to provide a power conversion device capable of capacity expansion.

### [Technical Solution]

In order to solve the above technical problem, a power conversion device according to an embodiment of the present invention comprises: a first power conversion unit and a second power conversion unit that convert input power and output the converted power; a first passive element being connected in series to an output end of the first power conversion unit and a second passive element being connected in series to an output end of the second power conversion unit; and a switching unit being connected to the output end of the first power conversion unit and the output end of the second power conversion unit to set a connection state between the output end of the first power conversion unit and the output end of the second power conversion unit.

In addition, the switching unit may operate in first to third modes, and the switching unit may be fixed to a first switching state such that the output end of the first power conversion unit and the output end of the second power conversion unit are connected in series in the first mode, fixed to a second switching state such that the output end of the first power conversion unit and the output end of the second power conversion unit are connected in parallel in the second mode, and perform a switching operation to repeat the first switching state and the second switching state at a predetermined ratio in the third mode.

In addition, the switching unit includes a plurality of switching elements, and among the plurality of switching elements, a plurality of switching elements that are in an ON state in the first switching state may operate in synchronization in the third mode.

In addition, the switching unit includes a plurality of switching elements, and among the plurality of switching elements, a plurality of switching elements that are in an ON state in the first switching state may operate with a phase difference in an interleaved manner in the third mode.

In addition, the switching unit may include: a first switching element being connected between a positive (+) output end of the first power conversion unit and a positive (+) output end of the second power conversion unit; a second switching element being connected between the positive (+) output end of the second power conversion unit and a negative (-) output end of the first power conversion unit; and a third switching element being connected between the negative (-) output end of the first power conversion unit and a negative (-) output end of the second power conversion unit.

In addition, the switching unit may include: a fourth switching element being connected between a positive (+) output end of the first power conversion unit and a positive (+) output end of the second power conversion unit; a fifth switching element and a sixth switching element being connected in series between the positive (+) output end of the second power conversion unit and a negative (-) output end of the first power conversion unit; a seventh switching element being connected between the negative (-) output end of the first power conversion unit and a negative (-) output end of the second power conversion unit; a first capacitor being connected between a first node, which is a node between the fifth switching element and the sixth switching element, and the positive (+) output end of the first power conversion unit; and a second capacitor being connected between the first node and the negative (-) output end of the second power conversion unit.

In addition, the first passive element may include a first inductor, and the second passive element may include a second inductor.

In addition, the first inductor may be connected in series to the positive (+) output end of the first power conversion unit, and the second inductor may be connected in series to the negative (-) output end of the second power conversion unit.

In addition, the first inductor may be connected in series to the negative (-) output end of the first power conversion unit, and the second inductor may be connected in series to the positive (+) output end of the second power conversion unit.

In addition, the first passive element may include a first coupling inductor, and the second passive element may include a second coupling inductor.

In addition, the first coupling inductor may include a third inductor being connected in series to the positive (+) output end of the first power conversion unit, and a fourth inductor being connected in series to the negative (-) output end of the first power conversion unit and coupled with the third inductor; and the second coupling inductor may include a fifth inductor being connected in series to the positive (+) output end of the second power conversion unit, and a sixth inductor being connected in series to the negative (-) output end of the second power conversion unit and coupled with the fifth inductor.

In addition, the first passive element may include a seventh inductor being connected in series to the negative (-) output end of the first power conversion unit, and the second passive element may include an eighth inductor being connected in series to the positive (+) output end of the second power conversion unit and coupled with the seventh inductor.

### [Advantageous Effects]

According to embodiments of the present invention, it is possible to expand power capacity for high current or high voltage with a single circuit configuration. In addition, power capacity expansion for both high current and high voltage is possible while maintaining continuous power delivery. Furthermore, by providing two types of bypass modes, losses caused by switching losses can be minimized, and there is an advantage of having a wide range of conditions in which the bypass modes can be used. Additionally, a switching mode is provided to allow the gain of the output voltage and current to be varied. By adjusting to variable gains during the expansion of output current/voltage, operational flexibility can be increased.

### [Brief Description of Drawings]

FIG. 1 is a block diagram of a power conversion device according to an embodiment of the present invention.
FIGS. 2 to 4 are block diagrams of a power conversion device according to an embodiment of the present invention.
FIGS. 5 to 17 are views for explaining embodiments of each component of the power conversion device according to an embodiment of the present invention.
FIGS. 18 to 20 are views for explaining an operation of the power conversion device according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the embodiments of the present invention are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

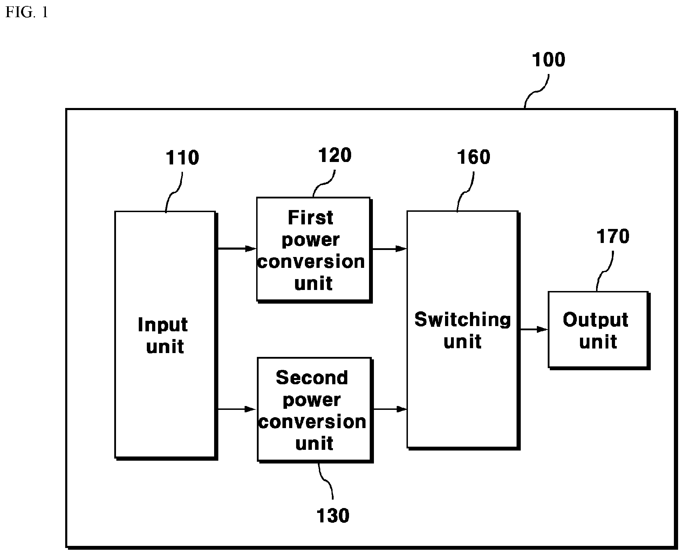

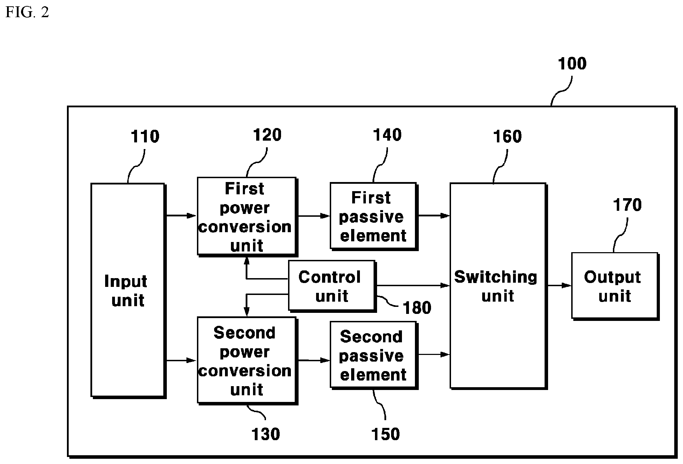

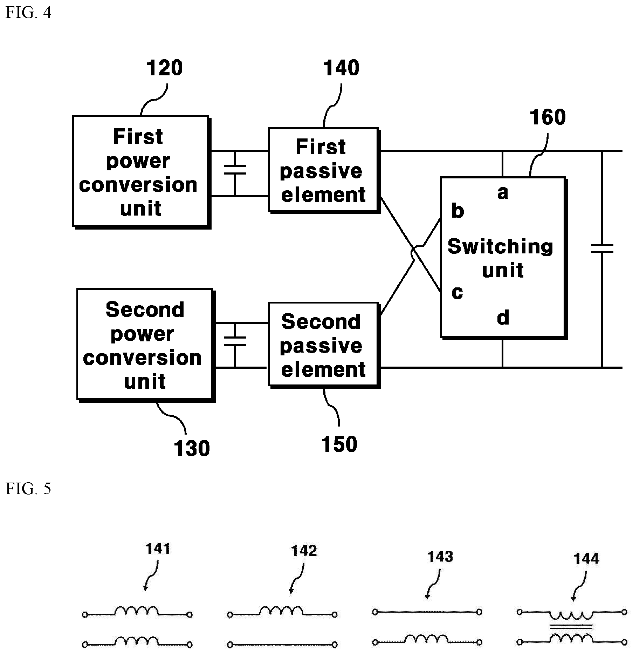

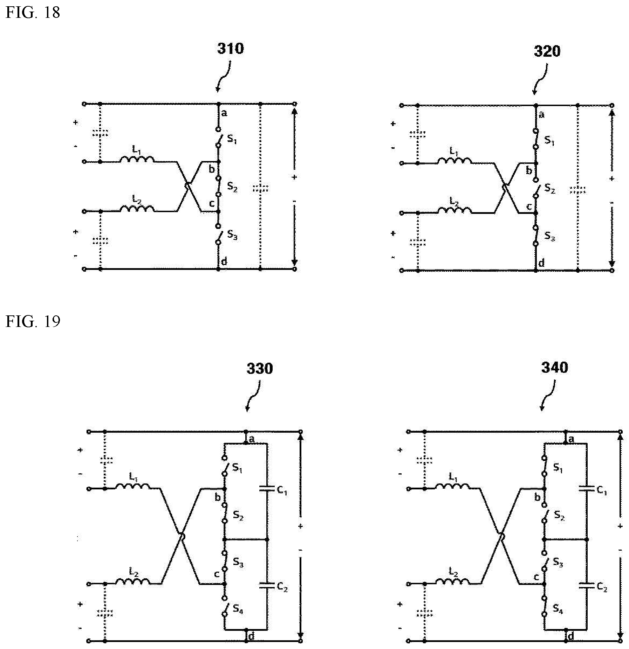

FIG. 1 is a block diagram of a power conversion device according to an embodiment of the present invention. FIGS. 2 to 4 are block diagrams of a power conversion device according to an embodiment of the present invention; FIGS. 5 to 17 are views for explaining embodiments of each component of the power conversion device according to an embodiment of the present invention; and FIGS. 18 to 20 are views for explaining an operation of the power conversion device according to an embodiment of the present invention.

A power conversion device **100** according to an embodiment of the present invention consists of a first power conversion unit **120**, a second power conversion unit **130**, and a switching unit **160**, and may include a first passive element **140**, a second passive element **150**, an input unit **110**, an output unit **170**, and a control unit **180**. The power conversion device **100** according to an embodiment of the present invention may be a power conversion device for charging a battery of a vehicle, or may be a power conversion device that receives and converts power from various other types of power sources.

A first power conversion unit **120** and a second power conversion unit **130** convert input power and output the converted power. The first power conversion unit **120** and the second power conversion unit **130** receive power being inputted through an input unit **110**, convert the power, and output the converted power. The first power conversion unit **120** and the second power conversion unit **130** may convert the input power into power to be supplied to a load being connected to an output unit **170** and output the converted power. Here, the load is a device that receives power and may include an electric vehicle. The first power conversion unit **120** and the second power conversion unit **130** may be DC-DC converters, or may be AC-DC or DC-AC converters. In addition, they may be boost converters, buck converters, or boost-buck converters, and may be unidirectional or bidirectional converters. The first power conversion unit **120** and the second power conversion unit **130** may include an isolated converter, and may include non-resonant isolated converters such as a phase-shift full-bridge converter (PSFB), a dual active bridge converter (DAB), a forward converter, a fly-back converter, and the like, and may include resonant isolated converters such as a resonant LLC converter, a resonant CLLC converter, a resonant CLLLC converter, a series-resonant converter, and the like. They may also include a non-isolated converter.

To increase a range of output voltage or output current, a first power conversion unit **120** and a second power conversion unit **130** may be used. When the first power conversion unit **120** and the second power conversion unit **130** are connected in series, the range of the output voltage is expanded to the sum of the output voltages of the respective power conversion units, but the range of the output current is not expanded. In this case, it is suitable for high-voltage output applications, but it is disadvantageous in terms of conduction loss at a high current. When the first power conversion unit **120** and the second power conversion unit **130** are connected in parallel, the range of the output current is expanded to the sum of the output currents of the respective power conversion units, but the range of the output voltage is not expanded. In this case, it is suitable for high-current output applications, but it is disadvantageous for outputting a high voltage.

To expand capacity suitable for applications requiring both high-voltage and high-current output, a power conversion device **100** according to an embodiment of the present invention includes a switching unit **160**.

The switching unit **160** is connected to an output end of the first power conversion unit **120** and an output end of the second power conversion unit **130** and may set a connection state between the output end of the first power conversion unit **120** and the output end of the second power conversion unit **130**. The switching unit **160** includes a plurality of switches and may set the connection state between the output end of the first power conversion unit **120** and the output end of the second power conversion unit **130** according to the on/off state of the switches.

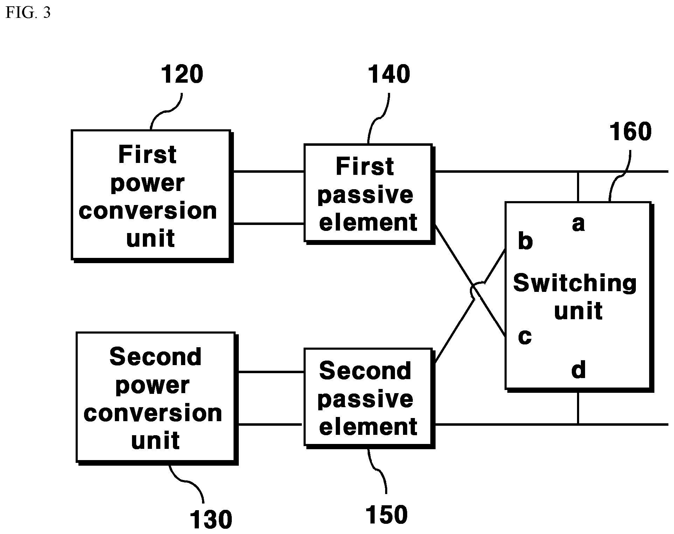

An output end of the first power conversion unit **120** may be connected to the switching unit **160** through a first passive element **140** being connected in series, and an output end of the second power conversion unit **130** may be connected to the switching unit **160** through a second passive element **150** being connected in series. As shown in FIG. 3, the first passive element **140** and the second passive element **150** may be connected to the first power conversion unit **120** and the second power conversion unit **130**, respectively. In addition, as shown in FIG. 4, a capacitor may be included between the first power conversion unit **120** and the first passive element **140**, and a capacitor may be included between the second power conversion unit **130** and the second passive element **150**. A capacitor may also be included at an output side of the switching unit **160**.

The first passive element **140** may be connected to the output end of the first power conversion unit **120**. The first passive element **140** may include an inductor. At this time, it may include single inductors **142** and **143** being connected in series to one of the positive (+) output end and the negative (-) output end of the first power conversion unit **120**, or may include a plurality of inductors **141** being connected in series to both the positive (+) and negative (-) output ends of the first power conversion unit **120**, or may include a plurality of inductors **144** being connected in series to both the positive (+) and negative (-) output ends of the first power conversion unit **120** while being coupled with each other. It may include an inductor being connected in series to one of the positive (+) and negative (-) output ends of the first power conversion unit **120** and coupled with an inductor being connected to the second power conversion unit **130**. The first passive element **140** may include a capacitor and may include a capacitor being connected between the positive (+) output end and the negative (-) output end of the first power conversion unit **120**. The first passive element **140** may include a capacitor and an inductor, and may include a capacitor being connected between the positive (+) and negative (-) output ends of the first power conversion unit **120** and an inductor being connected in series to the output end of the first power conversion unit **120**. The first passive element **140** may allow the output of the first power conversion unit **120** to be stably inputted to the switching unit **160**.

The second passive element **150** may be connected to the output end of the second power conversion unit **130**. The second passive element **150** may include an inductor. At this time, it may include single inductors **142** and **143** being connected in series to one of the positive (+) output end and the negative (-) output end of the second power conversion unit **130**, or may include a plurality of inductors **141** being connected in series to both the positive (+) and negative (-) output ends of the second power conversion unit **130**, or may include a plurality of inductors **144** being connected in series to both the positive (+) and negative (-) output ends of the second power conversion unit **130** while being coupled with each other. It may include an inductor being connected in series to one of the positive (+) and negative (-) output ends of the second power conversion unit **130** and coupled with an inductor being connected to the first power conversion unit **120**. The second passive element **150** may include a capacitor and may include a capacitor being connected between the positive (+) output end and the negative (-) output end of the second power conversion unit **130**. The second passive element **150** may include a capacitor and an inductor, and may include a capacitor being connected between the positive (+) and negative (-) output ends of the second power conversion unit **130** and an inductor being connected in series to the output end of the second power conversion unit **130**. The second passive element **150** may allow the output of the second power conversion unit **130** to be stably input to the switching unit **160**.

The control unit **180** may control a switching operation of the switching unit **160**. The control unit **180** may include an MCU and may include one or more processors. The control unit **180** may detect a voltage, a current, or power of the input unit **110** or the output unit **170** and control the switching unit **160** accordingly, and may control the switching unit **160** according to a user setting or a command received from an external controller. The control unit **180** may control power conversion of the first power conversion unit **120** and the second power conversion unit **130**. The first power conversion unit **120** or the second power conversion unit **130** may include at least one or more switches, and the control unit **180** may control the corresponding switches to convert input power.

The switching unit **160** may operate in first to third modes. In the first mode, the switching unit **160** may be fixed in a first switching state such that the output end of the first power conversion unit **120** and the output end of the second power conversion unit **130** are connected in series, and in the second mode, the switching unit **160** may be fixed in a second switching state such that the output end of the first power conversion unit **120** and the output end of the second power conversion unit **130** are connected in parallel. The first mode and the second mode may be bypass modes in which the output of the first power conversion unit **120** and the output of the second power conversion unit **130** are outputted to the output unit **170**.

In the first mode, the output end of the first power conversion unit **120** and the output end of the second power conversion unit **130** are connected in series, and two output voltages are summed, whereby a range of the output voltage may be expanded. To this end, the switching unit **160** may be fixed in a first switching state.

In the second mode, the output end of the first power conversion unit **120** and the output end of the second power conversion unit **130** are connected in parallel, and two output currents are summed, whereby a range of the output current may be expanded. To this end, the switching unit **160** may be fixed in a second switching state.

The switching unit **160** is not fixed in a first switching state or a second switching state, but may operate in a third mode in which it performs a switching operation to repeat the first switching state and the second switching state at a predetermined ratio. In the third mode, the output of the first power conversion unit **120** and the output of the second power conversion unit **130** may repeat series connection and parallel connection. Within one repeating period, the switching unit may operate such that a series connection time and a parallel connection time are in a predetermined ratio.

Through this, an output voltage range and an output current range of the output being outputted through the output unit **170** may be simultaneously expanded. The range of the output voltage may be expanded to a value between 0.5 to 1.0 times the sum of the output voltages of the two power conversion units. Here, 0.5 times the sum of the output voltages may be equal to the average. The range of the output current may be expanded to a value between 0.5 to 1.0 times the sum of the output currents of the two power conversion units. Here, 0.5 times the sum of the output currents may be equal to the average.

In the third mode, when the first switching state and the second switching state are repeated and the ratio of the first switching state is higher than the ratio of the second switching state, the expansion of the output voltage range may be greater than the expansion of the output current range. Conversely, in the third mode, when the first switching state and the second switching state are repeated and the ratio of the first switching state is lower than the ratio of the second switching state, the expansion of the output voltage range may be smaller than the expansion of the output current range. That is, the output can be varied by controlling the switching unit **160** according to the type or characteristics of power required by the load being connected to the output unit **170**.

The switching unit **160** includes a plurality of switching elements, and among the plurality of switching elements, a plurality of switching elements that are in an ON state in the first switching state may operate in synchronization in the third mode. Among the plurality of switching elements, a plurality of switching elements that are in an ON state in the second switching state may also operate in synchronization in the third mode. By adjusting the duty of the plurality of switches that are turned on in each switching state, a gain of an output according to an input may be varied.

The switching unit **160** includes a plurality of switching elements, and among the plurality of switching elements, a plurality of switching elements that are in an ON state in the first switching state may operate with a phase difference in an interleaved manner in the third mode. Among the plurality of switching elements, a plurality of switching elements that are in an ON state in the second switching state may also operate with a phase difference in an interleaved manner in the third mode. By adjusting the duty of the plurality of switches that are turned on in each switching state, a gain of an output according to an input may be varied, and ripples may be reduced by operating in the interleaved manner.

In order for the switching unit **160** to operate in the first to third modes, the switching unit **160** may include three switches or four or more switches. When including three switches, the operation of the switching unit **160** can be implemented with only a small number of switches. When including four switches, the required voltage withstand rating of the switches can be lowered. For example, if the output is 1000V, a switch with a 1200V specification must be used when using three switches; however, when using four switches, a switch with a 650V specification can be used. In addition, when using four switches, a capacitor may be included to suppress voltage spikes of each switch.

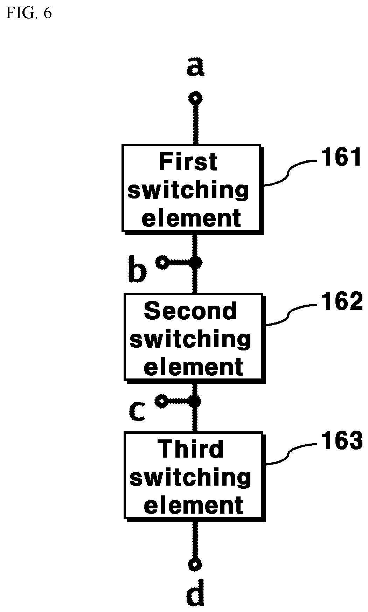

When the switching unit **160** includes three switches, the switching unit **160** may include a first switching element **161**, a second switching element **162**, and a third switching element **163**. As shown in FIG. 6, the first switching element **161** is connected between a positive (+) output end **a** of the first power conversion unit **120** and a positive (+) output end **b** of the second power conversion unit **130**, the second switching element **162** is connected between the positive (+) output end **b** of the second power conversion unit **130** and a negative (-) output end **c** of the first power conversion unit **120**, and the third switching element **163** may be connected between the negative (-) output end **c** of the first power conversion unit **120** and a negative (-) output end **d** of the second power conversion unit **130**.

The first switching element **161** to the third switching element **163** may include at least one semiconductor switch, and may include a MOSFET or a MOSFET including a diode. In addition, one or more of the first switching element **161** to the third switching element **163** may include a diode.

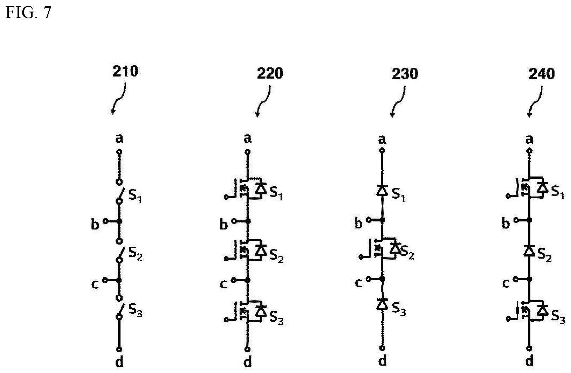

As shown in **210** of FIG. 7, all three switching elements may include semiconductors, and as shown in **220**, they may include MOSFETs including diodes for bidirectional input/output connection. Alternatively, as shown in **230**, it may include one MOSFET and two diodes, and as shown in **240**, it may include two MOSFETs and one diode. As shown in FIG. 7, the connection direction of the diodes may be arranged such that a cathode is connected toward the positive (+) output end **a** of the first power conversion unit **120** and an anode is connected toward the negative (-) output end **d** of the second power conversion unit **130**.

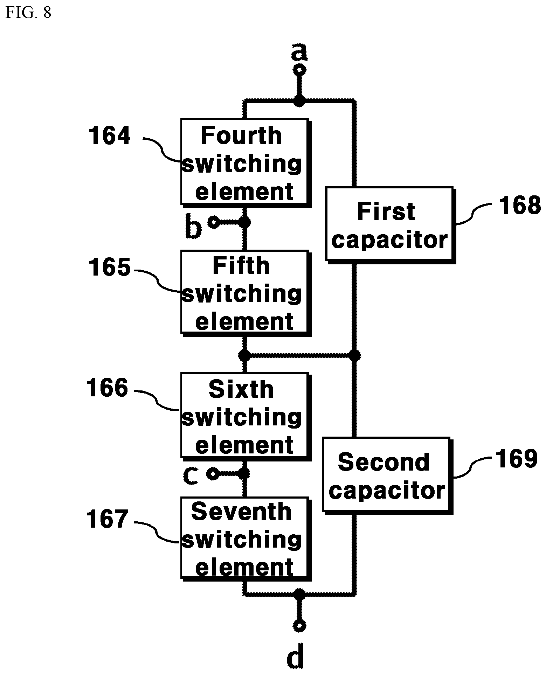

When the switching unit **160** includes four switches, the switching unit **160** may include a fourth switching element **164**, a fifth switching element **165**, a sixth switching element **166**, and a seventh switching element **167**, and may include a first capacitor **168** and a second capacitor **169**. As shown in FIG. 8, the fourth switching element **164** is connected between the positive (+) output end **a** of the first power conversion unit **120** and the positive (+) output end **b** of the second power conversion unit, the fifth switching element **165** and the sixth switching element **166** are connected in series between the positive (+) output end **b** of the second power conversion unit **130** and the negative (-) output end **c** of the first power conversion unit **120**, and the seventh switching element **167** may be connected between the negative (-) output end **c** of the first power conversion unit **120** and the negative (-) output end **d** of the second power conversion unit **130**. The first capacitor **168** is connected between a first node, which is a node between the fifth switching element **165** and the sixth switching element **166**, and the positive (+) output end **a** of the first power conversion unit **120**, and the second capacitor **169** may be connected between the first node and the negative (-) output end **d** of the second power conversion unit.

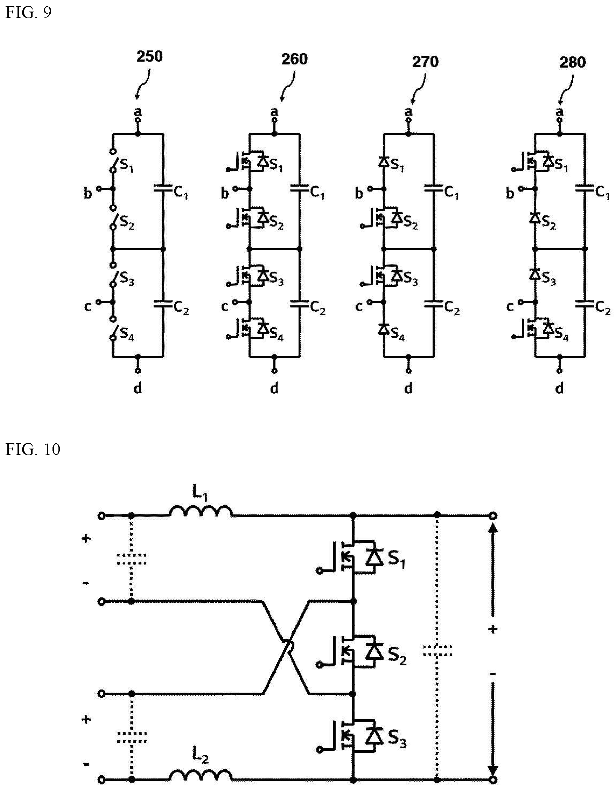

As shown in **250** of FIG. 9, all four switching elements may include semiconductors, and as shown in **260**, they may include MOSFETs including diodes for bidirectional input/output connection. As shown in **270** or **280**, it may include two MOSFETs and two diodes. As shown in FIG. 9, the connection direction of the diodes may be arranged such that a cathode is connected toward the positive (+) output end **a** of the first power conversion unit **120** and an anode is connected toward the negative (-) output end **d** of the second power conversion unit **130**.

The first passive element **140** may include a first inductor, and the second passive element **150** may include a second inductor. The first inductor may be connected in series with a positive (+) output end of the first power conversion unit **120**, and the second inductor may be connected in series with a negative (-) output end of the second power conversion unit **130**.

When the switching unit **160** includes three switches, as shown in FIG. 10, a first inductor **L₁** may be connected to the positive (+) output end of the first power conversion unit **120** and a first switching element **S₁**, and a second inductor **L₂** may be connected to the negative (-) output end of the second power conversion unit **130** and a third switching element **S₃**. The negative (-) output end of the first power conversion unit **120** may be connected to a node between a second switching element **S₂** and the third switching element **S₃**, and the positive (+) output end of the second power conversion unit **130** may be connected to a node between the first switching element **S₁** and the second switching element **S₂**.

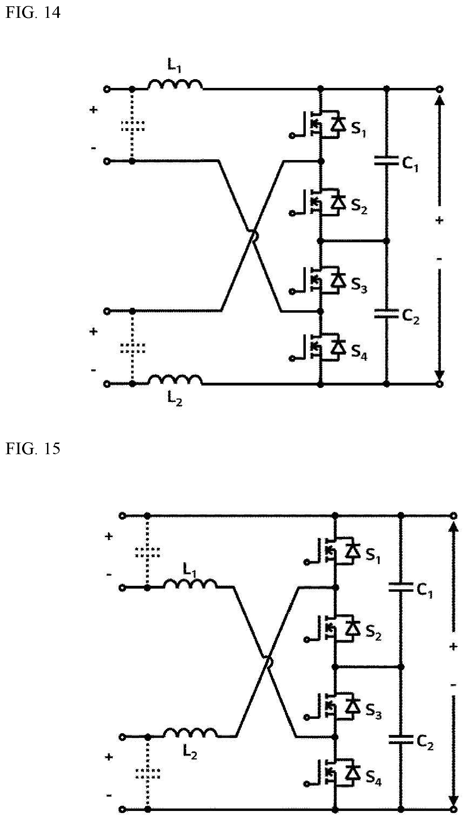

When the switching unit **160** includes four switches, as shown in FIG. 14, a first inductor **L₁** may be connected to the positive (+) output end of the first power conversion unit **120** and a fourth switching element **S₁**, and a second inductor **L₂** may be connected to the negative (-) output end of the second power conversion unit **130** and a seventh switching element **S₄**. The negative (-) output end of the first power conversion unit **120** may be connected to a node between a sixth switching element **S₃** and the seventh switching element **S₄**, and the positive (+) output end of the second power conversion unit **130** may be connected to a node between the fourth switching element **S₁** and a fifth switching element **S₂**.

The first passive element **140** may include a first inductor, and the second passive element **150** may include a second inductor. The first inductor may be connected in series with a negative (-) output end of the first power conversion unit **120**, and the second inductor may be connected in series with a negative (-) output end of the second power conversion unit **130**.

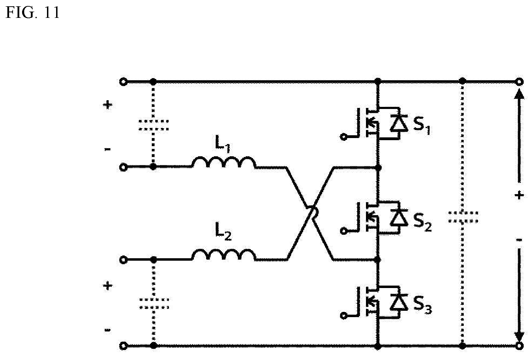

When the switching unit **160** includes three switches, as shown in FIG. 11, a first inductor **L₁** is connected to a node between a second switching element **S₂** and a third switching element **S₃** and a negative (-) output end of the first power conversion unit **120**, a second inductor **L₂** is connected to a node between a first switching element **S₁** and the second switching element **S₂** and a positive (+) output end of the second power conversion unit **130**, the positive (+) output end of the first power conversion unit **120** may be connected to the first switching element **S₁**, and the negative (-) output end of the second power conversion unit **130** may be connected to the third switching element **S₃**.

When the switching unit **160** includes four switches, as shown in FIG. 15, a first inductor **L₁** is connected to a node between a sixth switching element **S₃** and a seventh switching element **S₄** and a negative (-) output end of the first power conversion unit **120**, a second inductor **L₂** is connected to a node between a fourth switching element **S₁** and a fifth switching element **S₂** and a positive (+) output end of the second power conversion unit **130**, the positive (+) output end of the first power conversion unit **120** may be connected to the fourth switching element **S₁**, and the negative (-) output end of the second power conversion unit **130** may be connected to the seventh switching element **S₄**.

The first passive element **140** may include a first coupling inductor, and the second passive element **150** may include a second coupling inductor. Inductor current ripples can be reduced by using the coupling inductors.

The first coupling inductor may include a third inductor connected in series with the positive (+) output end of the first power conversion unit **120**, and a fourth inductor being connected in series with the negative (-) output end of the first power conversion unit **120** and coupled with the third inductor. The second coupling inductor may include a fifth inductor connected in series with the positive (+) output end of the second power conversion unit **130**, and a sixth inductor being connected in series with the negative (-) output end of the second power conversion unit **130** and coupled with the fifth inductor.

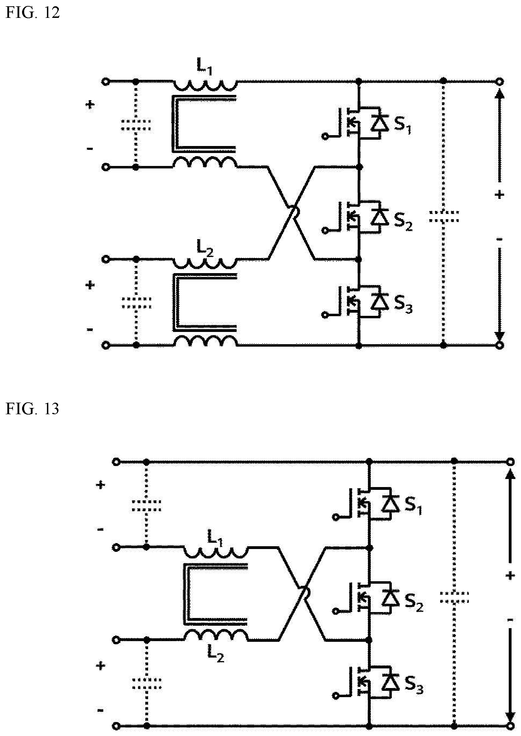

When the switching unit **160** includes three switches, as shown in FIG. 12, a third inductor **L₁** is connected to the positive (+) output end of the first power conversion unit **120** and a first switching element **S₁**, and a fourth inductor is an inductor coupled with the third inductor **L₁** and may be connected between the negative (-) output end of the first power conversion unit **120** and a node between a second switching element **S₂** and a third switching element **S₃**. A fifth inductor **L₂** is connected to a node between the first switching element **S₁** and the second switching element **S₂** and the positive (+) output end of the second power conversion unit **130**, and a sixth inductor is an inductor being coupled with the fifth inductor **L₂** and may be connected between the negative (-) output end of the second power conversion unit **130** and the third switching element **S₃**.

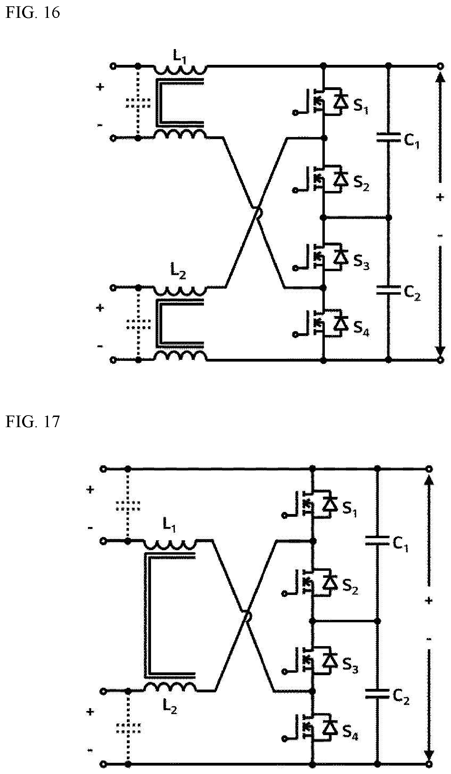

When the switching unit **160** includes four switches, as shown in FIG. 16, a third inductor **L₁** is connected to the positive (+) output end of the first power conversion unit **120** and a fourth switching element **S₁**, and a fourth inductor is an inductor coupled with the third inductor **L₁** and may be connected between the negative (-) output end of the first power conversion unit **120** and a node between a sixth switching element **S₃** and a seventh switching element **S₄**. A fifth inductor **L₂** is connected to a node between the fourth switching element **S₁** and a fifth switching element **S₂** and the positive (+) output end of the second power conversion unit **130**, and a sixth inductor is an inductor being coupled with the fifth inductor **L₂** and may be connected between the negative (-) output end of the second power conversion unit **130** and the seventh switching element **S₄**.

The first passive element **140** includes a seventh inductor being connected in series with the negative (-) output end of the first power conversion unit **120**, and the second passive element **150** may include an eighth inductor being connected in series with the positive (+) output end of the second power conversion unit **130** and coupled with the seventh inductor. Inductor current ripples can be reduced by using the coupling inductors.

When the switching unit **160** includes three switches, as shown in FIG. 13, a seventh inductor **L₁** is connected between the negative (-) output end of the first power conversion unit **120** and a node between a second switching element **S₂** and a third switching element **S₃**, and the positive (+) output end of the first power conversion unit **120** may be connected to a first switching element **S₁**. An eighth inductor **L₂** is connected between the positive (+) output end of the second power conversion unit **130** and a node between the first switching element **S₁** and the second switching element **S₂** to be coupled with the seventh inductor **L₁**, and the negative (-) output end of the second power conversion unit **130** may be connected to the third switching element **S₃**.

When the switching unit **160** includes four switches, as shown in FIG. 17, a seventh inductor **L₁** is connected between the negative (-) output end of the first power conversion unit **120** and a node between a sixth switching element **S₃** and a seventh switching element **S₄**, and the positive (+) output end of the first power conversion unit **120** may be connected to a fourth switching element **S₁**. An eighth inductor **L₂** is connected between the positive (+) output end of the second power conversion unit **130** and a node between the fourth switching element **S₁** and a fifth switching element **S₂** to be coupled with the seventh inductor **L₁**, and the negative (-) output end of the second power conversion unit **130** may be connected to the seventh switching element **S₄**.

As shown in FIG. 6, when there are three switches, in a first mode, the first switching element **161** and the third switching element **163** are turned off and the second switching element **162** is turned on to form a first switching state in which the output end of the first power conversion unit **120** and the output end of the second power conversion unit **130** are connected in series. When the first passive element **140**, the second passive element **150**, and the switching unit **160** are implemented as shown in FIG. 18, as shown in **310**, the first switching element **S₁** and the third switching element **S₃** are turned off and the second switching element **S₂** is turned on, so that the negative (-) output end of the first power conversion unit **120** and the positive (+) output end of the second power conversion unit **130** may be connected through **L₁**, which is the first passive element, and **L₂**, which is the second passive element.

In a second mode, the first switching element **161** and the third switching element **163** are turned on and the second switching element **162** is turned off to form a second switching state in which the output end of the first power conversion unit **120** and the output end of the second power conversion unit **130** are connected in parallel. As shown in **320** of FIG. 18, the first switching element **S₁** and the third switching element **S₃** are turned on and the second switching element **S₂** is turned off, so that the positive (+) output end of the first power conversion unit **120** and the positive (+) output end of the second power conversion unit **130** are connected through **L₂**, which is the second passive element, and the first switching element **S₁**, and the negative (-) output end of the first power conversion unit **120** and the negative (-) output end of the second power conversion unit **130** may be connected through **L₁**, which is the first passive element, and the third switching element **S₃**.

As shown in FIG. 8, when there are four switches, in a first mode, the fourth switching element **164** and the seventh switching element **167** are turned off and the fifth switching element **165** and the sixth switching element **166** are turned on to form a first switching state in which the output end of the first power conversion unit **120** and the output end of the second power conversion unit **130** are connected in series. When the first passive element **140**, the second passive element **150**, and the switching unit **160** are implemented as shown in FIG. 19, as shown in **330**, the fourth switching element **S₁** and the seventh switching element **S₄** are turned off and the fifth switching element **S₂** and the sixth switching element **S₃** are turned on, so that the negative (-) output end of the first power conversion unit **120** and the positive (+) output end of the second power conversion unit **130** may be connected through **L₁**, which is the first passive element, the sixth switching element **S3**, the fifth switching element **S2**, and **L₂**, which is the second passive element.

In a second mode, the fourth switching element **164** and the seventh switching element **167** are turned on and the fifth switching element **165** and the sixth switching element **166** are turned off to form a second switching state in which the output end of the first power conversion unit **120** and the output end of the second power conversion unit **130** are connected in parallel. As shown in **340** of FIG. 19, the fourth switching element **S₁** and the seventh switching element **S₄** are turned on and the fifth switching element **S₂** and the sixth switching element **S₃** are turned off, so that the positive (+) output end of the first power conversion unit **120** and the positive (+) output end of the second power conversion unit **130** are connected through **L₂**, which is the second passive element, and the fourth switching element **S₁**, and the negative (-) output end of the first power conversion unit **120** and the negative (-) output end of the second power conversion unit **130** may be connected through **L₁**, which is the first passive element, and the seventh switching element **S₄**.

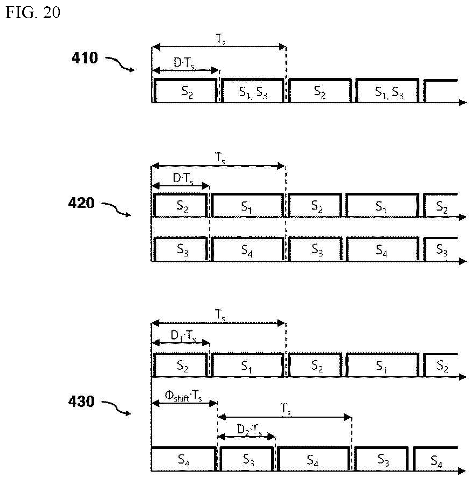

In a third mode, the first switching state and the second switching state may be repeated. When there are three switches, the state **310** and state **320** of FIG. 18 may be repeated, and each switch may operate as shown in **410** of FIG. 20.

As shown in **410** of FIG. 20, a second switching state in which the first switching element **S₁** and the third switching element **S₃** are turned off and the second switching element **S₂** is turned on, and a first switching state in which the first switching element **S₁** and the third switching element **S₃** are turned on and the second switching element **S₂** is turned off, may be repeated every cycle. The gain can be varied by controlling the duty ratio between the first switching state and the second switching state.

When there are four switches, the state **330** and state **340** of FIG. 19 may be repeated, and each switch may operate as shown in **420** or **430** of FIG. 20. As shown in **420** of FIG. 20, a second switching state in which the fourth switching element **S₁** and the seventh switching element **S₄** are turned off and the fifth switching element **S₂** and the sixth switching element **S₃** are turned on, and a first switching state in which the fourth switching element **S₁** and the seventh switching element **S₄** are turned on and the fifth switching element **S₂** and the sixth switching element **S₃** are turned off, may be repeated every cycle. The gain can be varied by controlling the duty ratio between the first switching state and the second switching state. At this time, as shown in **420**, it may operate in a synchronous manner in which the fourth switching element **S₁** and the seventh switching element **S₄** are simultaneously turned on and off and the fifth switching element **S₂** and the sixth switching element **S₃** are simultaneously turned on and off, or as shown in **430**, the fourth switching element **S₁** and the seventh switching element **S₄** may be turned on and off in an interleaved manner with a phase difference, and the fifth switching element **S₂** and the sixth switching element **S₃** may be turned on and off in an interleaved manner with a phase difference. At this time, the phase difference may be 180°.

In FIG. 20, **Ts** is the switching period, and **D** is the duty ratio, which can have a value between 0 and 1 (0 to 100%). **Φ_{shift}** is the phase shift, which can have a value between 0 and 180°. In **430**, **D₁** and **D₂** may have the same value (**D** = **D₁** = **D₂**). In the interleaved method, the phase difference may be 180°.

The relationship between input and output can be expressed as follows.${V}_{out} / \left({V}_{in 1}+{V}_{in 2}\right) = 1 / \left(2-D\right) or {I}_{out} / \left({I}_{in 1}+{I}_{in 2}\right) = \left(2-D\right) / 2$

Here, **Vₒᵤₜ** denotes the output voltage of the output unit **170**, **Iₒᵤₜ** denotes the output current of the output unit **170**, **Vᵢₙ₁** and **Vᵢₙ₂** denote the output voltages of each power conversion unit, and **Iᵢₙ₁** and **Iᵢₙ₂** denote the output currents of each power conversion unit.

Since **D** has a value between 0 and 1, **Vₒᵤₜ** and **Iₒᵤₜ** may have a value between 0.5 and 1.0 times the sum of the output voltages or the sum of the output currents of each power conversion unit.

The method of expanding power capacity by connecting in series or parallel can only implement operations where **D** corresponds to 0 or 1. That is, it can have only one of the values, either 0.5 or 1.0 times the sum of the output voltages or the sum of the output currents of each power conversion unit.

The control unit **180** can complexly control the switching unit **160** in the first mode, the second mode, and the third mode, and can continuously output the output voltage and output current of the power conversion device without interruption through the second mode.

As described above, by controlling the switching unit **160** to change the connection state between the output end of the first power conversion unit **120** and the output end of the second power conversion unit **130**, it is possible to expand power capacity to high current or high voltage with a single circuit configuration. In addition, it is possible to expand power capacity to both high current and high voltage while maintaining continuous power delivery. Furthermore, by providing two types of bypass modes, losses due to switching loss can be minimized, and there is an advantage in that the range of conditions for using the bypass mode is wide. Also, by providing a switching mode, the gain of the output voltage and current can be varied. By adjusting to a variable gain in the expansion of output current/voltage, operational flexibility can be enhanced.

Those of ordinary skill in the art to which the present embodiment pertains will understand that the embodiment may be implemented in modified forms without departing from the essential characteristics of the above description. Therefore, the disclosed methods should be considered from an explanatory perspective rather than a restrictive one. The scope of the present invention is defined by the claims rather than the foregoing description, and all differences within the equivalent scope should be interpreted as being included in the present invention.

## Claims

1. A power conversion device comprising:
a first power conversion unit and a second power conversion unit configured to convert input power and output the converted power;
a first passive element connected in series to an output end of the first power conversion unit;
a second passive element connected in series to an output end of the second power conversion unit; and
a switching unit connected to the output end of the first power conversion unit and the output end of the second power conversion unit
wherein the switching unit sets a connection state between the output end of the first power conversion unit and the output end of the second power conversion unit.

2. The power conversion device according to claim 1,
wherein the switching unit operates in first to third modes,
wherein, in the first mode, the switching unit is fixed in a first switching state such that the output end of the first power conversion unit and the output end of the second power conversion unit are connected in series,
wherein, in the second mode, the switching unit is fixed in a second switching state such that the output end of the first power conversion unit and the output end of the second power conversion unit are connected in parallel, and
wherein, in the third mode, the switching unit performs a switching operation to repeat the first switching state and the second switching state at a predetermined ratio.

3. The power conversion device according to claim 2,
wherein the switching unit includes a plurality of switching elements, and
wherein among the plurality of switching elements, a plurality of switching elements that are in an ON state in the first switching state operate in synchronization in the third mode.

4. The power conversion device according to claim 2,
wherein the switching unit includes a plurality of switching elements, and
wherein among the plurality of switching elements, a plurality of switching elements that are in an ON state in the first switching state operate with a phase difference in an interleaved manner in the third mode.

5. The power conversion device according to claim 1,
wherein the switching unit includes:
a first switching element connected between a positive (+) output end of the first power conversion unit and a positive (+) output end of the second power conversion unit;
a second switching element connected between the positive (+) output end of the second power conversion unit and a negative (-) output end of the first power conversion unit; and
a third switching element connected between the negative (-) output end of the first power conversion unit and a negative (-) output end of the second power conversion unit.

6. The power conversion device according to claim 1,
wherein the switching unit includes:
a fourth switching element connected between a positive (+) output end of the first power conversion unit and a positive (+) output end of the second power conversion unit;
a fifth switching element and a sixth switching element connected in series between the positive (+) output end of the second power conversion unit and a negative (-) output end of the first power conversion unit;
a seventh switching element connected between the negative (-) output end of the first power conversion unit and a negative (-) output end of the second power conversion unit;
a first capacitor connected between a first node, which is a node between the fifth switching element and the sixth switching element, and the positive (+) output end of the first power conversion unit; and
a second capacitor connected between the first node and the negative (-) output end of the second power conversion unit.

7. The power conversion device according to claim 1,
wherein the first passive element includes a first inductor, and wherein the second passive element includes a second inductor.

8. The power conversion device according to claim 7,
wherein the first inductor is connected in series to a positive (+) output end of the first power conversion unit, and
wherein the second inductor is connected in series to a negative (-) output end of the second power conversion unit.

9. The power conversion device according to claim 1,
wherein the first passive element includes a first coupling inductor,
wherein the second passive element includes a second coupling inductor,
wherein the first coupling inductor includes:
a third inductor connected in series to a positive (+) output end of the first power conversion unit;
and a fourth inductor connected in series to a negative (-) output end of the first power conversion unit and coupled with the third inductor, and
wherein the second coupling inductor includes:
a fifth inductor connected in series to a positive (+) output end of the second power conversion unit; and
a sixth inductor connected in series to a negative (-) output end of the second power conversion unit and coupled with the fifth inductor.

10. The power conversion device according to claim 1,
wherein the first passive element includes a seventh inductor connected in series to a negative (-) output end of the first power conversion unit, and
wherein the second passive element includes an eighth inductor connected in series to a positive (+) output end of the second power conversion unit and coupled with the seventh inductor.
